# EUROPÄISCHE PATENTSCHRIFT

(11) **EP 1 694 544 B1**
(45) Veröffentlichungstag und Bekanntmachung des Hinweises auf die Patenterteilung: **18.07.2007**
(21) Anmeldenummer: 04789936.4
(22) Anmeldetag: 07.10.2004
(51) Int. Cl.: B60T 8/36, B60T 8/48

(54) **VERFAHREN ZUM ANSTEUERN EINES ZWEISTUFIGEN SCHALTVENTILS**
METHOD FOR CONTROLLING A TWO-STAGE SELECTOR VALVE
PROCEDE POUR COMMANDER UNE SOUPAPE DE COMMANDE A DEUX ETAGES

(30) Priorität: 26.11.2003 DE 10355849; 08.04.2004 DE 102004018191
(43) Veröffentlichungstag der Anmeldung: 30.08.2006
(73) Patentinhaber: ROBERT BOSCH GMBH, 70442 Stuttgart (DE)
(72) Erfinder: KAESTNER, Frank, 74321 Bietigheim-Bissingen (DE); BRUEX, Thomas, 72070 Tuebingen (DE); GRIMM, Andreas, 75233 Tiefenbronn-Muehlhausen (DE); BUSSMANN, Otmar, 71254 Ditzingen (DE)
(86) Internationale Anmeldenummer: PCT/DE2004/002225
(87) Internationale Veröffentlichungsnummer: WO 2005/051740

(56) Entgegenhaltungen:
- WO-A-96/15926
- WO-A-97/02970
- WO-A-98/38069
- WO-A-98/57834
- DE-A- 3 924 510

## Beschreibung

Die Erfindung betrifft ein Verfahren zum Ansteuern eines zweistufigen Schaltventils gemäß dem Oberbegriff des Patentanspruchs 1.

Moderne Fahrzeuge mit Fahrdynamikregelungssystemen, wie z.B. ESP (elektronisches Stabilitätsprogramm) oder ASR (Antriebsschlupfregelung), umfassen speziell angepasste Bremssysteme. Derartige Bremssysteme haben in der Regel mehrere Ventile, mit denen zwischen einem Fuß-Bremsbetrieb und einem automatischen Bremsbetrieb umgeschaltet werden kann.

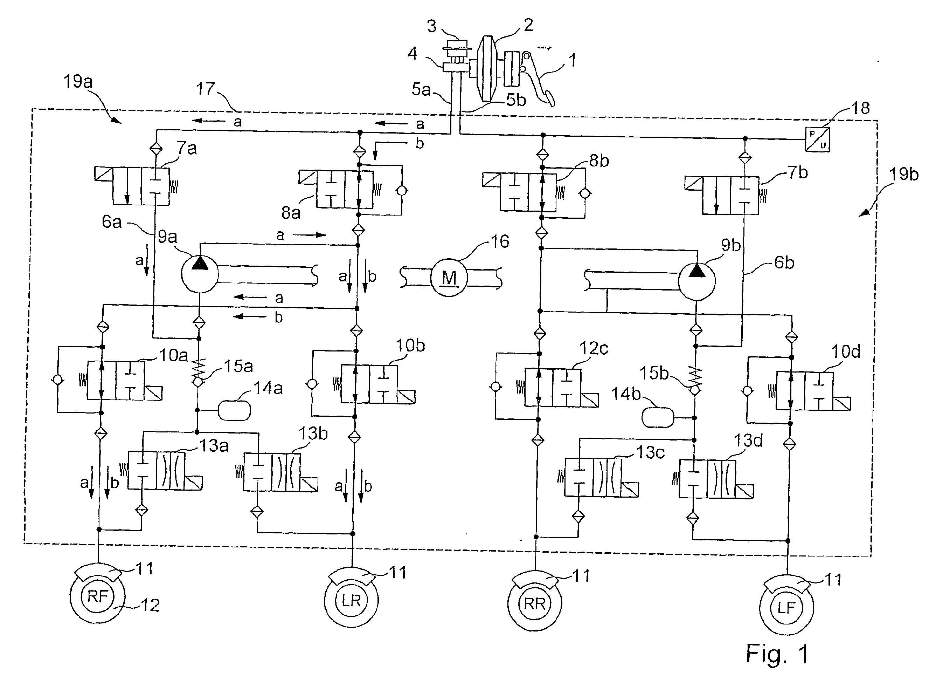

Fig. 1 zeigt ein aus dem Stand der Technik bekanntes hydraulisches Bremssystem 14, das zur Durchführung einer Fahrdynamikregelung eingerichtet ist. Das Bremssystem 17 umfasst zwei Bremskreise 19a,19b in X- oder H -Aufteilung, die symmetrisch ausgebildet sind. Im Folgenden wird daher nur auf den in der Fig. links dargestellten Teil 19a Bezug genommen.

Das Bremssystem umfasst ein Fuß-Bremspedal 1, einen Bremskraftverstärker 2 mit einem daran angeschlossenen Hauptbremszylinder 4, auf dem ein Bremsflüssigkeitsbehälter 3 angeordnet ist. Bei einer Betätigung des Fuß-Bremspedals 1 wird in den Hauptbremsleitungen 5a,5b ein entsprechender Druck erzeugt, der über ein Umschaltventil 8a und die beiden Einlassventile 10a,10b auf die Bremsbacken 11 der Räder 12 wirkt. Der Pfad, in dem sich bei Betätigung des Fuß-Bremspedals 1 Druck aufbaut, ist durch Pfeile b gekennzeichnet. Ein Hochdruckschaltventil 7a ist in diesem Zustand geschlossen.

Bei einem Eingriff der Fahrdynamikregelung wird der Bremsdruck automatisch aufgebaut und auf vorgegebene Räder 12 verteilt. Das Bremssystem 17 umfasst zu diesem Zweck eine Hydraulikpumpe 9a, die von einem Steuergerät (nicht gezeigt) angesteuert wird. Bei einer Regelung ist das Umschaltventil 8a geschlossen und das Hochdruckschaltventil 7a meist geöffnet. Die Hydraulikpumpe 9a fördert das Hydraulikfluid dann entlang der Pfade a zu den Bremsbacken 11. Das Hydraulikfluid strömt somit aus dem Bremsflüssigkeitsbehälter 3, durch die Hauptbremsleitung 5a, das Hochdruckschaltventil 7a, eine Ansaugleitung 6a, durch die Hydraulikpumpe 9a und weiter durch die Einlassventile 10a,10b zu den Bremsbacken 11. Die Modulation des Bremsdrucks erfolgt mittels der Einlassventile 10a, 10b und der Auslassventile 13a,13b, wobei kurzzeitige Druckspitzen in einen Ausgleichsbehälter 14a gepuffert werden.

Um ein Überlaufen des Ausgleichsbehälters 14a zu vermeiden, pumpt die Hydraulikpumpe 9a die überschüssige Bremsflüssigkeit regelmäßig zurück in Richtung des Bremsflüssigkeitsbehälters 3. Hierzu wird das Hochdruckschaltventil 7a geschlossen. Während der Rückforderung von Bremsflüssigkeit kann die Ansaugleitung 6a der Pumpe 9a evakuiert werden. Öffnet sich in diesem Zustand die Hauptstufe des Hochdruckschaltventils 7a wieder, fließt die Bremsflüssigkeit schlagartig in den evakuierten Raum der Ansaugleitung 6a. Dieser Vorgang erzeugt insbesondere bei einem Vordruck im Bereich von ca. 10bar - 40bar ein sehr lautes, den Fahrer irritierendes Geräusch (den sogenannten Druckausgleichsschlag) und eine deutliche Bremspedalbewegung.

Das Hochdruckschaltventil 7a ist üblicherweise zweistufig, mit einer Vor- und einer Hauptstufe, ausgeführt, um auch bei hohen Differenzdrücken das Öffnen des Ventils 7 zu ermöglichen. Der am Schaltventil 7a anliegende Differenzdruck hat eine schließende Wirkung auf das Ventil. Durch Öffnen der Vorstufe baut sich der Differenzdruck leicht ab, so dass die Hauptstufe mit geringerem Energieaufwand geöffnet werden kann.

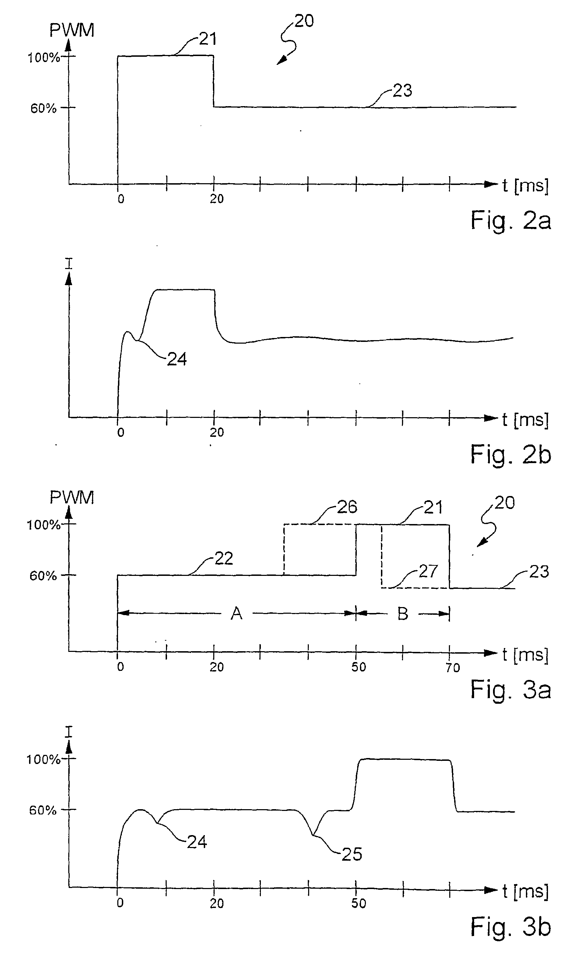

Das Hochdruckschaltventil 7a wird üblicherweise mit einem pulsweitenmodulierten Spannungssignal (PWM-Signal) angesteuert. Um insbesondere bei hohen Differenzdrücken ein sicheres Öffnen des Ventils 7a zu gewährleisten, wird das Ventil 7a zu Beginn der Ansteuerung für eine Zeitdauer von ca. 20ms mit einem PWM-Signal von 100% angesteuert. Fig. 2a zeigt den Verlauf des PWM-Steuersignals bei der bisherigen Ansteuerung. Anschließend wird das PWM-Signal 20 aus Gründen der thermischen Belastbarkeit des Ventils 7a druckabhängig z.B. auf 60% verringert (siehe Abschnitt 23 des Steuersignals 20). Diese Art der Ansteuerung führt in vielen Fällen zu einem sofortigen Öffnen der Hauptstufe des Schaltventils 7 und damit zu dem erwähnten Druckausgleichsschlag.

Fig. 2b zeigt den Verlauf des durch eine Spule des Ventils fließenden Stroms. Der Stromeinbruch 24 kennzeichnet dabei das Öffnen der Vorstufe des Ventils. Die Hauptstufe öffnet unmittelbar anschließend, wodurch es zum Druckausgleichsschlag kommt.

Es ist daher die Aufgabe der vorliegenden Erfindung, ein zweistufiges Schaltventil derart zu öffnen, dass ein Druckausgleichsschlag nicht oder nur noch in geringem Ausmaß auftritt.

Gelöst wird diese Aufgabe gemäß der Erfindung durch die im Patentanspruch 1 angegebenen Merkmale. Weitere Ausgestaltungen der Erfindung sind Gegenstand von Unteransprüchen.

Ein wesentlicher Aspekt der Erfindung besteht darin, das zweistufige Schaltventil derart anzusteuern, dass sich in einer ersten Phase nur die Vorstufe des Ventils öffnet und die Hauptstufe des Ventils erst nach einer vorgegebenen Zeit aufgeht, wenn bereits ein gewisser Druckausgleich am Ventil stattgefunden hat. Um dies zu erreichen, wird das Schaltventil erfindungsgemäß in der ersten Phase mit einem Steuersignal mit kleinem Pegel angesteuert, durch das sich zunächst nur die Vorstufe des Ventils öffnet. Erst nach einer vorgegebenen Zeit wird das Schaltventil dann mit einem größeren Steuersignal angesteuert, um sicherzustellen, dass sich das Ventil in jedem Fall vollständig (d.h. auch die Hauptstufe) öffnet. Durch die zweistufige Ansteuerung wird das Öffnen der Hauptstufe verzögert, so dass sich der Druckausgleichsschlag deutlich verringert.

Der Signalpegel während der ersten Ansteuerphase ist vorzugsweise derart gewählt, dass das Öffnen der Hauptstufe des Schaltventils um wenigstens 10ms, vorzugsweise um wenigstens 30ms verzögert wird. Dadurch kann ein Druckausgleich am Ventil stattfinden, der den Druckausgleichsschlag mindert.

Gemäß einer bevorzugten Ausführungsform der Erfindung wird das mehrstufige Ansteuerverfahren nur innerhalb eines vorgegebenen Druckbereichs zwischen z.B. 10 und 30 bar und insbesondere zwischen 5 und 35 bar durchgeführt. Oberhalb von 30 bis 40 bar ist es aus technischen Gründen normalerweise nicht möglich, die Hauptstufe des Schaltventils auch bei maximaler Ansteuerung sofort zu öffnen. Unterhalb von 5 bis 10 bar ist die Geräuschentwicklung und Pedalrückwirkung des Druckausgleichsschlages ohnehin sehr gering. Der am Schaltventil herrschende Druck kann z.B. mittels eines Vordrucksensors gemessen oder geschätzt werden.

Das Öffnungsverhalten des Ventils ist in der Regel stark spannungs- und temperaturabhängig. Das Ansteuersignal für das Ventil wird daher vorzugsweise spannungs- und/oder temperaturkompensiert. Die am Ventil tatsächlich anliegende Spannung kann z.B. gemessen und die Spulentemperatur geschätzt werden.

Die Erfindung wird nachstehend anhand der beigefügten Zeichnungen beispielhaft näher erläutert. Es zeigen:
Fig. 1 ein aus dem Stand der Technik bekanntes hydraulisches Bremssystem;
Fig. 2a den Verlauf eines Ansteuersignals für ein Hochdruckschaltventil gemäß dem Stand der Technik;
Fig. 2b den zugehörigen Stromverlauf in der Spule des Hochdruckschaltventils;
Fig. 3a den Verlauf des Ansteuersignals gemäß einer Ausführungsform der Erfindung;
Fig. 3b den zugehörigen Stromverlauf in der Spule des Hochdruckschaltventils;
Fig. 4 den Stromverlauf zum Öffnen der Vor- und Hauptstufe des Ventils in Abhängigkeit vom Druck; und
Fig. 5 ein Flußdiagramm der wesentlichen Verfahrensschritte eines Verfahrens zum Ansteuern eines Hochdruckschaltventils.

Bezüglich der Erläuterung der Fig. 1 bis 2b wird auf die Beschreibungseinleitung verwiesen.

Fig. 3a zeigt den Verlauf eines PWM-Steuersignals, mit dem das zweistufige Schaltventil 7a bzw. 7b angesteuert wird, wodurch sich zunächst die Vorstufe des Ventils und erst anschließend, nach einer vorgegebenen Verzögerungszeit, die Hauptstufe öffnet. Das Ventil 7a bzw. 7b wird zunächst mit einem PWM-Signal von z.B. 60% angesteuert und dieser Pegel für eine Zeitdauer von etwa 50ms beibehalten.

Fig. 3b zeigt den zugehörigen Stromverlauf durch die Spule des Ventils 7a bzw. 7b. Nach dem Zeitpunkt t=0 steigt der Strom zunächst bis auf einen ersten Pegel an, auf dessen Niveau er während der ersten Phase A bleibt. Ein erster Stromeinbruch 24 nach etwa 5ms zeigt das Öffnen der Vorstufe an. Durch den nun stattfindenden Druckausgleich reduziert sich die auf das Ventil wirkende Schließkraft, so dass auch die Hauptstufe des Ventils 7a bzw. 7b nach etwa 40s selbsttätig öffnet. Das Öffnen der Hauptstufe ist am zweiten Stromeinbruch 25 erkennbar. Nach z.B. 50ms wird der PWM-Pegel auf 100% erhöht (siehe Abschnitt 21 des Signals), um in jedem Fall sicherzustellen, dass das Ventil 7a,7b auch tatsächlich voll öffnet. Der Signalpegel wird nach etwa 20ms auf ein niedrigeres Niveau 23 zurückgefahren, um eine Überhitzung des Ventils zu vermeiden.

Der hohe Signalpegel 21 könnte wahlweise auch bereits vor dem selbsttätigen Öffnen der Hauptstufe angelegt werden, um ein vorzeitiges Öffnen der Hauptstufe des Ventils 7a,7b zu erzwingen und das Öffnen des Ventils 7a,7b zu beschleunigen. Der entsprechende Signalverlauf ist durch gestrichelte Linien 26 bzw. 27 dargestellt. Der Zeitpunkt des Öffnens der Hauptstufe sollte vorzugsweise wenigstens 10ms bis 20ms nach dem Öffnen der Vorstufe liegen, um zumindest einen geringen zwischenzeitlichen Druckausgleich am Ventil 7a,7b zu ermöglichen.

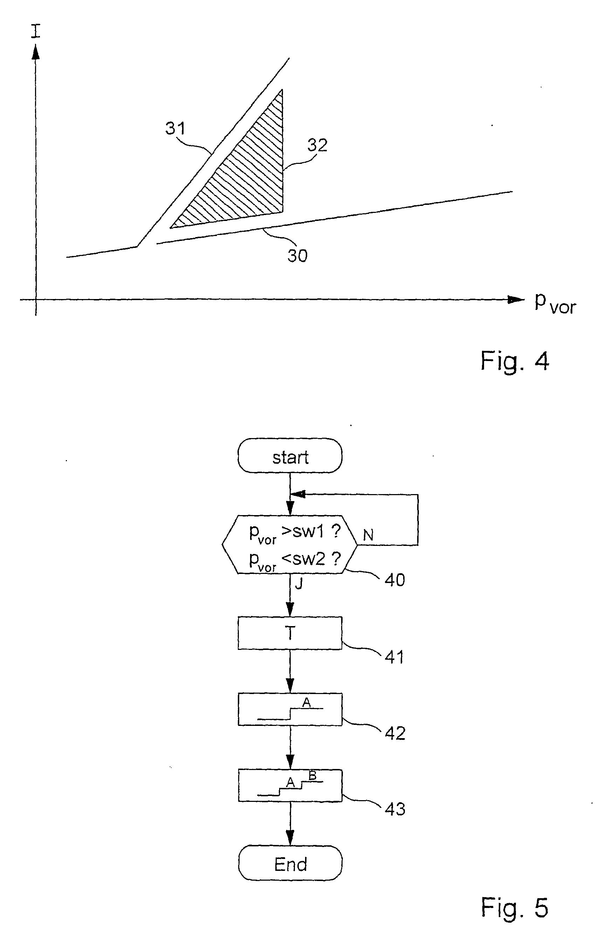

Fig. 4 zeigt den Strom des Ventils 7a,7b, der in Abhängigkeit vom Vordruck zum Öffnen der Vor- oder Hauptstufe erforderlich ist. Dabei kennzeichnet die Linie 30 den Mindeststrom zum Öffnen der Vorstufe und die Linie 31 den Mindeststrom zum Öffnen der Hauptstufe des Ventils 7a bzw. 7b. Wie zu erkennen ist, nimmt der erforderliche Mindeststrom mit zunehmendem Vordruck zu, da der Druck eine schließende Wirkung auf das Ventil hat. Der schraffierte Bereich 32 kennzeichnet den Strombereich, in dem nur die Vorstufe des Ventils 7a,7b geöffnet wird und der folglich für die Ansteuerphase A gewählt werden kann.

Fig. 5 zeigt die wesentlichen Verfahrensschritte eines Verfahrens zum Ansteuern eines zweistufigen Hochdruckschaltventils 7a,7b. Der entsprechende Algorithmus kann z.B. in einem Steuergerät (nicht gezeigt) hinterlegt sein. In einem ersten Schritt 40 wird zunächst geprüft, ob der am Ventil 7a bzw. 7b anstehende Vordruck innerhalb eines vorgegebenen Bereichs, z.B. zwischen 5 und 35 bar, liegt. Der Vordruck wird hierzu mittels des Vordrucksensor 29 (siehe Fig. 1) gemessen und mit vorgegebenen Schwellenwerten SW1,SW2 verglichen. Falls der Vordruck pᵥₒᵣ innerhalb des vorgegebenen Druckbereichs liegt (Fall J), wird in Schritt 41 die aktuelle Ventilspulentemperatur T geschätzt (die Temperatur könnte auch gemessen werden). In Schritt 42 wird das Ventil 7a bzw. 7b dann mit einem spannungs- und temperaturkompensierten Steuersignal 20 für eine vorgegebene Zeitdauer angesteuert, wobei das Steuersignal derart bemessen ist, dass die Vorstufe des Ventils 7a bzw. 7b öffnet, die Hauptstufe jedoch noch eine vorgegebene Zeit von wenigstens 20ms geschlossen bleibt. In Schritt 43 wird das Steuersignal dann erhöht, um in jedem Fall zu gewährleisten, dass das Ventil vollständig öffnet.

Durch die vorstehend beschriebene Ansteuerung des Hochdruckschaltventils 7a,7b kann ein Druckausgleichsschlag stark vermindert werden.

### Bezugszeichenliste

- 1: Fuß-Bremspedal
- 2: Bremskraftverstärker
- 3: Bremsflüssigkeitsbehälter
- 4: Hauptbremszylinder
- 5a, 5b: Hauptbremsleitungen
- 6a, 6b: Ansaugleitung
- 7a, 7b: Hochdruckschaltventil
- 8a,8b: Umschaltventil
- 9a, 9b: Hydraulikpumpe
- 10a-10d: Einschaltventile
- 11: Bremsbacken
- 12: Räder
- 13a-13d: Auslassventile
- 14a, 14b: Ausgleichsbehälter
- 15a, 15b: Rückschlagventile
- 16: Motor
- 17: Bremssystem
- 18: Vordrucksensor
- 19a,b: Bremskreise
- 20: PWM-Signal
- 21: hoher Signalpegel
- 22: niedriger Signalpegel
- 23: niedriger Signalpegel
- 24: öffnen der Vorstufe
- 25: öffnen der Hauptstufe
- 26: vorzeitiges öffnen der Hauptstufe
- 27: niedriger Signalpegel
- 30: Mindeststrom zum Öffnen der Vorstufe
- 31: Mindeststrom zum Öffnen der Hauptstufe
- 32: Zwischenstrombereich
- 40-43: Verfahrensschritte
- A: erste Phase
- B: zweite Phase
- pᵥₒᵣ: Vordruck

## Patentansprüche

1. Verfahren zum Ansteuern eines zweistufigen Schaltventils (7) mit einer ersten Stufe mit kleinerem Durchflussquerschnitt und einer zweiten Stufe mit größerem Dürchflussquerschnitt, das in einem hydraulischen Bremssystem (17) zwischen einem Hauptbremszylinder (4) und einer Hydraulikpumpe (9) angeordnet ist, **dadurch gekennzeichnet, dass** das Schaltventil (7) in einer ersten Phase (A) mit einem Steuersignal (20) mit kleiner Amplitude (22) angesteuert wird, um zuerst ausschließlich die Vorstufe des Schaltventils (7) für eine vorgegebene Zeitdauer zu öffnen, und in einer zweiten Phase (B) mit einem Steuersignal (20) mit größerer Amplitude (21, 26) angesteuert wird.

2. Verfahren nach Anspruch 1, **dadurch gekennzeichnet, dass** das Steuersignal (20) temperatur- und spannungskompensiert ist.

3. Verfahren nach Anspruch 1 oder 2, **dadurch gekennzeichnet, dass** der am Schaltventil (7) vorherrschende Differenzdruck ermittelt und das mehrphasige Ansteuerverfahren nur in einem vorgegebenen Druckbereich durchgeführt wird.

4. Verfahren nach Anspruch 3, **dadurch gekennzeichnet, dass** der Druckbereich zwischen wenigstens 10 bar und 30 bar und insbesondere zwischen 5 bar und 35 bar liegt.

5. Verfahren nach einem der vorhergehenden Ansprüche, **dadurch gekennzeichnet**, das Steuersignal (20) in der ersten Phase (A) derart bemessen ist, dass die erste Stufe des Schaltventils (7) für wenigstens 10ms, vorzugsweise wenigstens 30ms, offen ist, bevor sich die zweite Stufe öffnet.

6. Verfahren nach einem der vorhergehenden Ansprüche, **dadurch gekennzeichnet, dass** die zweite Phase (B) frühestens 30ms nach Beginn der ersten Phase (A) einsetzt.

## Claims

1. Method for actuating a two-stage switching valve (7) having a first stage with a relatively small throughflow cross section and a second stage with a relatively large throughflow cross section, which switching valve is arranged in a hydraulic brake system (17) between a master brake cylinder (4) and a hydraulic pump (9), **characterized in that** the switching valve (7) is actuated by a control signal (20) with a small amplitude (22) in a first phase (A) in order to firstly open solely the preliminary stage of the switching valve (7) for a predefined period of time, and is actuated by a control signal (20) with a greater amplitude (21, 26) in a second phase (B).

2. Method according to Claim 1, **characterized in that** the control signal (20) is temperature- and voltage-compensated.

3. Method according to Claim 1 or 2, **characterized in that** the differential pressure prevailing at the switching valve (7) is determined and the multiphase actuating method is carried out only in a predefined pressure range.

4. Method according to Claim 3, **characterized in that** the pressure range is between at least 10 bar and 30 bar, and in particular between 5 bar and 35 bar.

5. Method according to one of the preceding claims, **characterized in that** the control signal (20) is dimensioned in the first phase (A) in such a way that the first stage of the switching valve (7) is open for at least 10 ms, preferably at least 30 ms, before the second stage opens.

6. Method according to one of the preceding claims, **characterized in that** the second phase (B) starts at the earliest 30 ms after the beginning of the first phase (A).

## Revendications

1. Procédé pour commander une soupape de commutation à deux étages (7), comportant un premier étage à section d'écoulement plus petite et un deuxième étage à section d'écoulement plus grande, et disposée dans un système de freinage hydraulique (17) entre un maître-cylindre de frein (4) et une pompe hydraulique (9),
**caractérisé en ce qu'**
on commande la soupape de commutation (7) dans une première phase (A) par un signal de commande (20) de faible amplitude (22), afin d'ouvrir tout d'abord exclusivement l'étage préliminaire de cette soupape de commutation (7) pendant une durée prédéterminée, et dans une deuxième phase (B) par un signal de commande (20) de plus grande amplitude (21, 26).

2. Procédé selon la revendication 1,
**caractérisé en ce que**
le signal de commutation (20) est compensé en température et en tension.

3. Procédé selon la revendication 1 ou 2,
**caractérisé en ce qu'**
on détermine la pression différentielle régnant sur la soupape de commutation (7) et le procédé de commande multiphasique est réalisé seulement dans une gamme de pression prédéterminée.

4. Procédé selon la revendication 3,
**caractérisé en ce que**
la gamme de pression est d'au moins 10 bars à 30 bars et en particulier 5 bars à 35 bars.

5. Procédé selon l'une des revendications précédentes,
**caractérisé en ce que**
le signal de commande (20) est dimensionné dans la première phase (A) de telle manière que le premier étage de la soupape de commutation (7) est ouvert pendant au moins 10 ms, de préférence au moins 30 ms, avant l'ouverture du deuxième étage.

6. Procédé selon l'une des revendications précédentes,
**caractérisé en ce que**
la deuxième phase (B) s'établit au plus tôt 30 ms après le début de la première phase (A).
